# EUROPÄISCHE PATENTSCHRIFT

(11) **EP 3 738 729 B1**
(45) Veröffentlichungstag und Bekanntmachung des Hinweises auf die Patenterteilung: **30.08.2023**
(21) Anmeldenummer: 20163126.4
(22) Anmeldetag: 13.03.2020
(51) Int. Cl.: B25J 19/00, B25J 9/08, H02G 11/00

(54) **RÜCKZUGSYSTEM FÜR EINEN INDUSTRIEROBOTER**
RETRACTION SYSTEM FOR AN INDUSTRIAL ROBOT
SYSTÈME DE RÉTRACTION POUR UN ROBOT INDUSTRIEL

(30) Priorität: 13.05.2019 DE 102019112401
(43) Veröffentlichungstag der Anmeldung: 18.11.2020
(60) Teilanmeldung: 23181602.6
(73) Patentinhaber: Sumcab Specialcable GmbH, 74629 Pfedelbach (DE)
(72) Erfinder: SCHÜTZ, Lothar, 74243 Langenbrettach (DE)
(74) Vertreter: Herrmann, Jochen

(56) Entgegenhaltungen:
- EP-A2- 2 913 162
- DE-A1-102015 210 570
- DE-T2- 69 718 186

## Beschreibung

Die Erfindung betrifft ein Rückzugsystem für einen Industrieroboter, zur Straffung zumindest einer entlang eines Roboterarms geführten Zuführungsanordnung, mit einem Zuführungsschlauchs, zum Längenausgleich in Folge einer Bewegung des Roboterarms, wobei das Rückzugsystem wenigstens eine Rückstellfeder aufweist, die über ein Gegenlager mit dem Zuführungsschlauch koppelbar ist,

Aus der EP 1 848 571 B1 ist ein Rückzugssystem bekannt. Dieses Rückzugssystem dient als Leitungsführungseinrichtung zur Führung eines Schlauchpakets entlang eines insbesondere mehrachsigen Roboterarms eines Industrieroboters. Das Schlauchpaket enthält mehrere Einzelleitungen, über die eine am Ende des Roboterarms angeordnete Roboterhand und ein daran angeordnetes Werkzeug versorgt werden. Die Einzelleitungen sind üblicherweise von einem Zuführungsschlauch umhüllt und bilden so das Schlauchpaket. Um Relativbewegungen zwischen den Armabschnitten des Roboterarms für das Schlauchpaket auszugleichen sieht die Schrift ein in Längsrichtung verschiebliches Befestigungselement vor, an dem das Schlauchpaket über eine Klemmschelle gehalten ist. Damit das Befestigungselement verschoben werden kann ist es fest mit einer Gleitstange verbunden, welche wiederum gegen die Rückstellkraft eines Rückstellelements gleitend in einem ortsfesten Gleitführungselement gelagert ist. Durch eine auf das Schlauchpaket ausgeübte Zugkraft wird das Befestigungselement mit der Gleitstange gegen die Federkraft des als Druckfeder ausgelegten Rückstellelements verschoben. Lässt die Zugkraft nach, wird das Rückstellelement wieder zurückgezogen. Das Schlauchpaket bleibt somit immer gespannt und verfängt sich nicht an dem Roboterarm. In dem gezeigten Ausführungsbeispiel sind zwei Gleitstangen vorgesehen, welche in dem ortsfesten Gleitführungselement gleitend gelagert und endseitig mit dem Befestigungselement verbunden sind Nachteilig bei der offenbarten Leitungsführungseinrichtung ist, dass die Gleitstangen nur in einem vergleichsweise kurzen Teilabschnitt von dem Gleitführungselement gehalten sind. Insbesondere die ausgezogenen Gleitstangen bilden für seitlich auf das Befestigungselement einwirkende Kräfte einen großen Hebel. Solche auf das Befestigungselement, beispielsweise durch das Schlauchpaket, übertragene, seitlich wirkende Kräfte führen daher bei weit ausgezogenen Gleitstangen zu einer hohen Momentenbelastung des Gleitführungselements und der darin vorgesehenen Gleithülsen, was die Bewegung des Gleitstangen behindern und zu einem hohen Verschleiß der Gleithülsen führen kann. Weiterhinmuss sichergestellt sein, dass die Verfahrwege der Gleitstangen und des Befestigungselements vor und hinter dem Gleitführungselement frei bleiben. Hier bietet der gezeigte Aufbau keine konstruktiven Maßnahmen, sodass diese gesondert anzubringen sind. Für die Inbetriebnahme eines neu eingerichteten Industrieroboters ist häufig eine exakte Einstellung des Rück für Wegs vor Ort erforderlich. Das bekannte Rückzugssystem lässt sich hierbei nicht ohne weiteres individuell anpassen.

EP 2 913 162 A2 offenbart ein Rückzugsystem für einen Industrieroboter mit den Merkmalen des Oberbegriffs des unabhängigen Anspruchs 1. Weitere Rückzugssysteme sind aus DE 10 2015 210570 A1 und DE 697 18 186 T2 bekannt.

Es ist Aufgabe der Erfindung, ein stabiles und einfach aufgebautes Rückzugssystem bereitzustellen, welches sich insbesondere vor Ort exakt auf den vorgegebenen Anwendungsfall anpassen lässt

Diese Aufgabe wird dadurch gelöst, dass das gattungsgemäße Rückzugsystem zwei Halter aufweist die zueinander beabstandet angeordnet sind und die jeweils einen Stützabschnitt aufweisen, dass ein Hohlprofilabschnitt mit seinen längsseitigen Enden an den Stützabschnitten mittelbar oder unmittelbar anliegt, dass der von dem Hohlprofilabschnitt umgebene Hohlraum mit Durchführungen der Halter zur Durchleitung der Zuführanordnung in räumlicher Verbindung steht, dass ein Adapter mit zwei Koppelstücken vorgesehen ist, an denen die Halter angekoppelt sind, dass die beiden Koppelstücke über ein Verbindungsstück des Adapters miteinander verbunden sind, dass der Adapter wenigstens eine Reihe von Befestigungsaufnahmen aufweist, die vorzugsweise in gleicher Teilung zueinander beabstandet angeordnet sind, wobei die Reihe von Befestigungsaufnahmen in Richtung der Längserstreckung des Hohlprofilabschnitts verläuft, und dass der oder die Halter an den Befestigungsaufnahmen in verschiedenen, in Richtung der Längserstreckung des Hohlprofilabschnitts versetzt angeordneten, Befestigungspositionen an den Adapter ankoppelbar ist/sind, und/oder dass der Adapter wenigstens eine als Langloch ausgebildete Befestigungsaufnahme aufweist, welche sich in Richtung der Längserstreckung des Hohlprofilabschnitts erstreckt, und dass der Halter an dieser Befestigungsaufnahme in verschiedenen, in Richtung der Längserstreckung des Hohlprofilabschnitts versetzt angeordneten, Befestigungspositionen an den Adapter ankoppelbar ist.

Dieses Rückzugssystem weist einen baukastenartigen Aufbau auf. Abhängig von dem vorliegenden Anwendungsfall lässt sich der Hohlprofilabschnitt in der gewünschten Länge bereitstellen. Beispielsweise können unterschiedlich lange Hohlprofilabschnitte bereitgestellt werden. Der Anwender hat dann die Möglichkeit, den passenden Hohlprofilabschnitt auszuwählen, um ihn dann mit den Haltern zu verbinden. Denkbar ist es auch, dass der Anwender den Hohlprofilabschnitt in der geeigneten Länge von einem Profilabschnitt ablängt und ihn dann mit den Haltern verbaut.

Dadurch dass ein Adapter mit zwei Koppelstücken vorgesehen ist, an denen die Halter angekoppelt sind, und dass die beiden Koppelstücke über ein Verbindungsstück des Adapters miteinander verbunden sind, kann das Rückzugssystem in Form einer einheitlich handhabbaren Baugruppe mit dem Zuführschlauch vorinstalliert werden. Anschließend lässt sich diese vorinstallierte Baugruppe dann mit dem Industrieroboter verbinden.

Es kann ein Adapter verwendet werden, um damit unterschiedlich lange Hohlprofilabschnitte zu verbinden. Abhängig von der gewünschten Länge des Hohlprofilabschnitts lassen sich die Halter an der passenden Befestigungsaufnahme ankoppeln. Die Reihe von Befestigungsaufnahmen ermöglicht dabei eine Verstellung im Teilungsraster. Über ein Langloch kann eine stufenlose Verstellung gewährleistet werden. Denkbar ist auch eine Kombination, wobei der eine Halter in einer Reihe von Befestigungsaufnahmen verstellt und der andere Halter in einem Langloch verstellt werden kann. Auf diese Weise lässt sich ebenfalls eine Anpassung auf beliebige Längen von Hohlprofilabschnitten vornehmen. Weiterhin ist es denkbar, dass bei einer Reihe von Befestigungsaufnahmen diese Befestigungsaufnahmen als Langlöcher ausgestaltet sind.

Gemäß einer bevorzugten Erfindungsvariante kann es vorgesehen sein, dass die beiden Koppelstücke über das Verbindungsstück des Adapters einteilig miteinander verbunden sind.

Wenn vorgesehen ist, dass der Adapter von einem plattenförmigen Zuschnitt gebildet ist, besonders bevorzugt als Stanz-Biegeteil aus einem Blechmaterial besteht, dann ergibt sich ein einfacher Aufbau. Zudem können die beiden Halter über den Adapter passgenau auf Abstand zueinander montiert werden.

Eine zuverlässige Fixierung des Hohlprofilabschnitts kann dadurch erreicht werden, dass zumindest einer der Halter eine Wand aufweist, die an der Außenwandung oder der Innenwandung des Hohlprofilabschnitts im Bereich des zugewandten Endes des Hohlprofilabschnitts quer zur Längserstreckung des Hohlprofilabschnitts formschlüssig anliegt.

Ein erfindungsgemäßes Rückzugssystem kann dergestalt sein, dass zumindest einer der der Halter eine zumindest bereichsweise umlaufende ebene Fläche aufweist, die den Stützabschnitt bildet, und dass der Hohlprofilabschnitt im Bereich seines dem Halter zugewandten Endes mit seiner längsseitigen Stirnfläche anliegt. Dies ermöglicht auf einfache Weise eine axiale Fixierung des Hohlprofilabschnitts Wenn vorgesehen ist, dass wenigstens einer der Halter eine, vorzugsweise allseitig geschlossene Durchführung aufweist, die in einer Einführerweiterung ausläuft, wobei die Einführerweiterung auf der dem Hohlprofilabschnitt (60) abgewandten Seite des Halters angeordnet ist, dann wird sichergestellt, dass der Zuführschlauch auch dann zuverlässig in die Rückzugführung einfährt, wenn dieser im Winkel zu der Längsachse des Hohlprofilabschnitts steht

Zur Fixierung des oder der Halter kann es vorgesehen sein, dass dieser einen Halteabschnitt aufweist, an dem eine Schelle befestigt ist, und dass die Schelle an dem Adapter befestigt ist. Der oder die Halter lassen sich dementsprechend über die Schelle an dem Adapter einfach befestigen. Die Schelle kann als einfaches und kostengünstiges Bauteil zur Verfügung gestellt werden. Vorzugsweise kann zwischen den Schellen und den Haltern eine Klemmverbindung zur spielfreien Fixierung vorgesehen sein

Hierbei kann es vorzugsweise vorgesehen sein, dass zwei baugleiche Halter (50) und/oder zwei baugleiche Schellen sind. Auf diese Weise lässt sich der bauliche Aufwand durch die Verwendung von Gleichteilen erheblich reduzieren

Ein einfacher Aufbau für die Schellen ergibt sich dann, wenn vorgesehen ist, dass diese aus einem Unterteil und einem Oberteil zusammengesetzt sind, wobei das Unterteil mit dem Oberteil unter Vermittlung eines Filmscharniers einteilig verbunden ist.

Ein besonders einfach ausgebildetes Rückzugssystem kann so gestaltet sein, dass der Hohlprofilabschnitt als zylindrisches Rohr ausgebildet ist. Solche Hohlprofilabschnitte lassen sich kostengünstig beziehen und in der gewünschten Länge ablängen.

Wenn vorgesehen ist, dass die Rückstellfeder innerhalb des Hohlprofilabschnitts angeordnet ist, dann kann eine kompakte Bauweise verwirklicht werden und die Rückstellfeder ist geschützt untergebracht.

Gemäß einer der besonders bevorzugten Erfindungsvariante ist es vorgesehen, dass die Rückstellfeder unter Vermittlung des Gegenlagers mit dem Zuführschlauch verbindbar ist.

Eine ortsfeste sichere Verbindung des Gegenlagers mit dem Zuführschlauch gelingt dann auf einfache Weise, wenn vorgesehen ist, dass das Gegenlager in seinem, dem Zuführschlauch zugewandten Bereich wenigstens ein Formschlusselement aufweist, zur Bildung einer Formschlussverbindung mit einem Formschluss-Gegenelement auf der Außenseite des Zuführschlauchs.

Besonders bevorzugt kann es dabei vorgesehen sein, dass der Zuführschlauch auf seiner Außenseite eine Profilierung aufweist, welche die Formschluss-Gegenelemente bildet und die vorzugsweise von umlaufenden Rippen gebildet ist. Der Zuführschlauch kann dabei insbesondere als Wellschlauch ausgebildet sein. Solche Schläuche können als Standard-Bauteil kostengünstig bezogen werden.

Wenn vorgesehen ist, dass das Gegenlager zwei Hüllteile aufweist, die im Bereich eines Trennbereichs derart miteinander verbindbar sind, dass die beiden Hüllteile eine Aufnahme für den Zuführschlauch umschließen, dann lässt sich das Gegenlager auf einfache Weise an einem vorhandenen zu für Schlauch in der gewünschten Position montieren. Weiterhin ist es dann einfach möglich eine Positionsänderung des Gegenlagers durchzuführen, um eine Anpassung an die vorhandene Bausituation durchzuführen.

Ein erfindungsgemäßes Rückzugssystem kann dergestalt sein, dass die Rückstellfeder als Spiralfeder, vorzugsweise als Druckfeder ausgebildet ist und den Zuführschlauch umgibt, dass sich die Rückstellfeder im Bereich ihres einen Federendes an einem der Halter abstützt, und dass das andere Federende der Rückstellfeder an das Gegenlager angekoppelt ist.

Die Erfindung wird im Folgenden anhand eines in den Zeichnungen dargestellten Ausführungsbeispiels näher erläutert. Es zeigen:
Figur 1 einen Industrieroboter mit einem daran installierten Rückzugssystem,
Figur 2 das Rückzugssystem gemäß Figur 1 in einer perspektivischen Ansicht,
Figur 3 das Rückzugssystem gemäß Figur 2 in Explosionsdarstellung,
Figur 4 das Rückzugssystem gemäß Figur 2 mit einem Zuführschlauch, wobei zur besseren Verdeutlichung des Innenaufbaus ein Hohlprofilabschnitt entfernt wurde,
Figur 5 in perspektivischer Darstellung einen Halter des Rückzugssystems und
Figuren 6 und 7 zwei verschiedene Ausgestaltungsvarianten eines Gegenlagers in perspektivischer Ansicht.

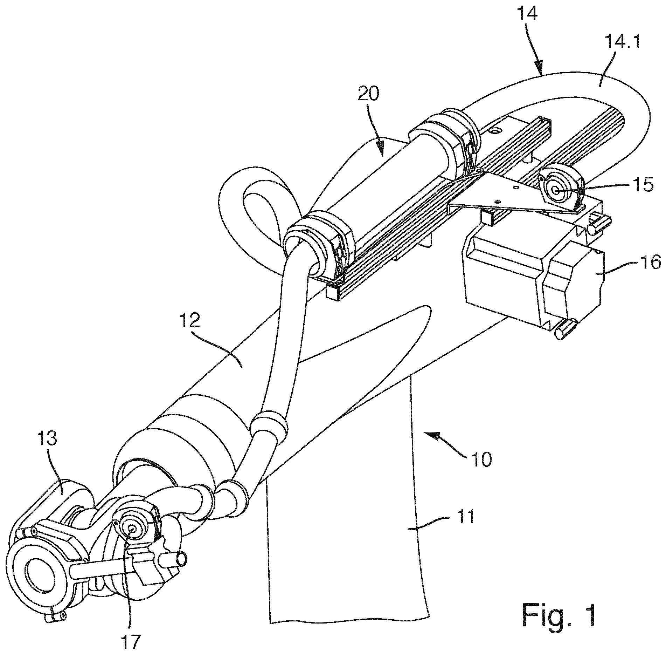

Figur 1 zeigt einen Industrieroboter 10 üblicher Bauweise, der eine Basis 11 aufweist. An der Basis 11 ist ein Roboterarm 12 befestigt. Der Roboterarm 12 trägt einen gelenkig daran angeschlossenen Kopf 13. An dem Kopf 13 können Werkzeuge für die jeweils durchzuführende Aufgabe des Industrieroboters 10 befestigt werden.

Entlang des Roboterarms 12 ist eine Zuführanordnung, bestehend aus einem Zuführschlauch 14 und einem Rückzugssystem 20 verlegt. Der Zuführschlauch 14 ist mit einem Anschluss 15 an eine Zuführeinheit 16 angeschlossen. Das andere Ende des Zuführschlauchs 14 ist über einen Anschluss 17 an das im Bereich des Kopfes 13 gehaltene Werkzeug angeschlossen. Innerhalb des Zuführschlauchs 14 können Versorgungsleitungen, beispielsweise Signalleitungen, eine Spannungsversorgung, ein Druckluftschlauch, eine Werkzeug-Zuführleitung und/oder dergleichen verlegt sein. Der Zuführschlauch 14 dient somit als Ummantelung von darin geführten Versorgungsleitungen. Zwischen dem Anschluss 15 und dem Rückzugssystem 20 ist der Zuführschlauch 14 in einem Bogen 14.1 verlegt.

Die Armabschnitte des Roboterarms 12 und der Kopf 13 sind dazu ausgelegt, relativ zueinander Bewegungen auszuführen. Dadurch verstellt sich während des Robotereinsatzes der Zuführschlauch 14 in Längsrichtung des Roboterarms 12. Aus diesem Grund ist der Führungsschlauch 14 zwischen dem Anschluss 15 und dem Rückzugssystem 20 in einem Bogen 14.1 verlegt. Dieser Bogen 14.1 dient dazu Abstandsveränderungen zwischen dem Kopf 13 und dem Rückzugssystem 20 auszugleichen. Das Rückzugssystem 20 hält den Führungsschlauch 14 im Bereich zwischen dem Kopf 13 und dem Rückzugssystem 20 auf Spannung, so dass der Führungsschlauch 12 dicht am Roboterarm geführt ist, um Kollisionen zu verhindern.

Es ist wünschenswert, dass der Bogen 14.1 so klein wie nötig gehalten wird, so dass auch im Bereich des Bogens 14.1 keine Kollisionsgefahr besteht. Um diese Anforderungen zu erfüllen, wird das erfindungsgemäße Rückzugssystem 20 eingesetzt.

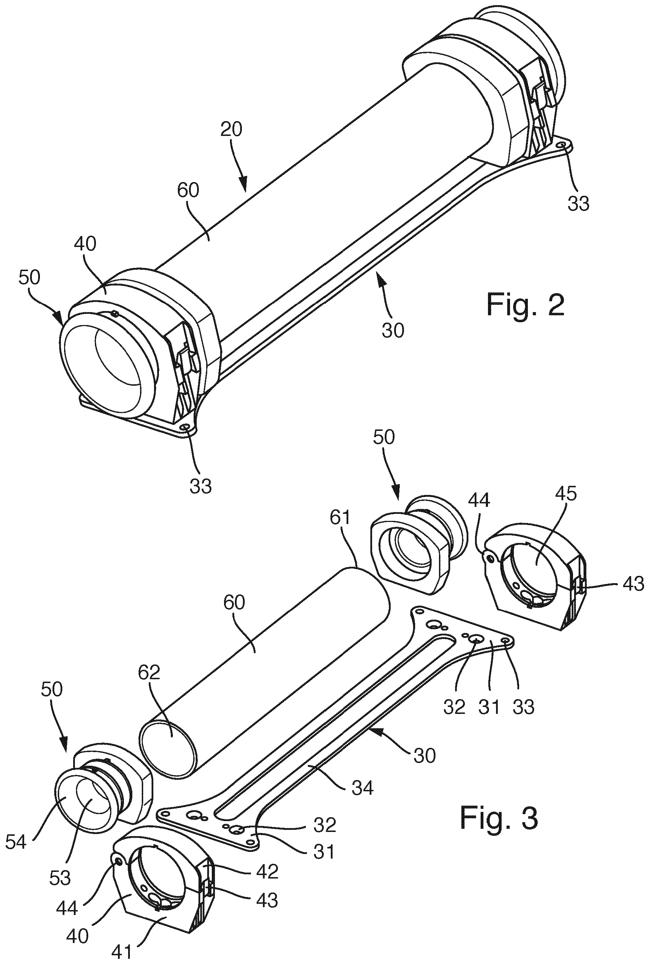

In den Figuren 1 und 2 ist das Rückzugssystem 20 isoliert dargestellt. Wie diese Zeichnungen zeigen, besitzt das Rückzugssystem 20 einen Adapter 30. Dieser Adapter 30 kann beispielsweise als Stanz-Biegeteil aus einem Blechzuschnitt gefertigt sein.

Der Adapter 30 besitzt ein Verbindungsstück 34. An dieses Verbindungsstück 34 sind zwei Koppelstücke 31 an den längsseitigen Enden angekoppelt. Die Koppelstücke 31 sind mit Befestigungsaufnahmen 32, 33 versehen.

Mit dem Adapter 30 lassen sich zwei Schellen 40 verbinden. Die Schellen 40 können vorzugsweise zweiteilig ausgeführt sein und ein Unterteil 41 und ein Oberteil 42 aufweisen. Besonders bevorzugt ist das Unterteil 41 mit dem Oberteil 42 einteilig über ein Filmscharnier 44 verbunden.

Das Unterteil 41 der Schellen 40 kann mit dem Adapter 30 verbunden werden. Zu diesem Zweck wird das Unterteil 41 auf die Oberseite des jeweils zugeordneten Koppelstücks 31 aufgesetzt. Das Unterteil 41 weist Schraubaufnahmen auf, die fluchtend zu Befestigungsaufnahmen 32 der Koppelstücke 31 angeordnet werden können. Von der Unterseite des Adapters 30 her können Befestigungsschrauben durch die Befestigungsaufnahmen 32 hindurchgeführt und in die Schraubaufnahmen des Unterteils 41 eingeschraubt werden. Auf diese Weise sind die Schellen 40 mit dem Adapter 30 verbunden.

Die Schellen 40 sind vorzugsweise baugleich ausgebildet.

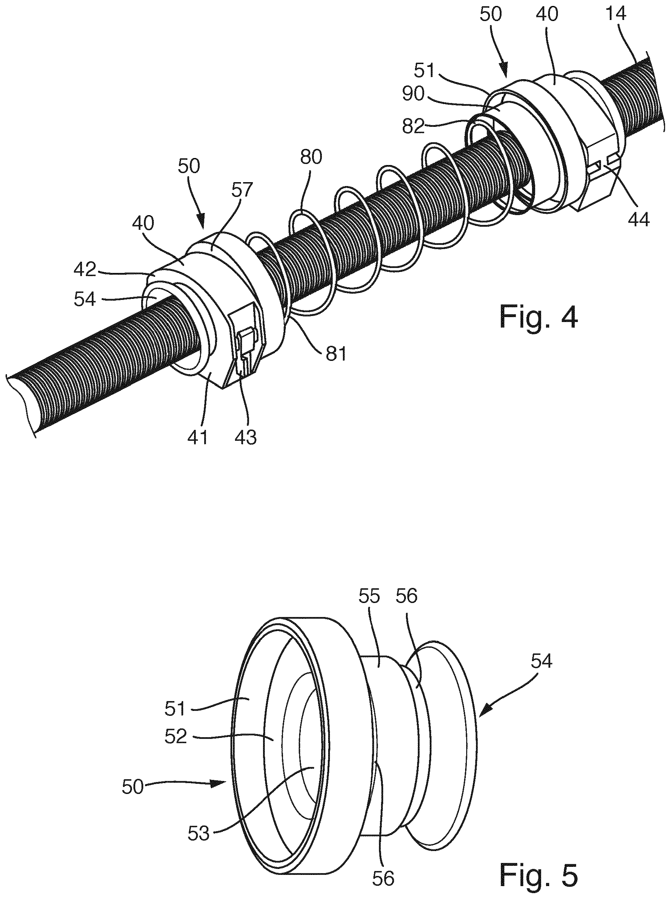

Mit den Schellen 40 lassen sich Halter 50 verbinden. Die Gestaltung der Halter 50 ist in Figur 5 näher detailliert. Wie diese Darstellung zeigt, weist der Halter 50 eine umlaufende Wand 51 auf. An diese umlaufende Wand 51 schließt sich ein Stützabschnitt 52 an. Dieser Stützabschnitt 52 ist in Form einer ringförmig umlaufenden Fläche ausgebildet.

Der Halter 50 besitzt eine Durchführung 53. Wie Figur 4 erkennen lässt, läuft diese Durchführung 53 in einer Einführerweiterung 54 aus. Die Einführerweiterung 54 erweitert die Durchführung 53 in radialer Richtung.

Der Halter 50 besitzt einen Halteabschnitt 55. Dieser kann beispielsweise als umlaufender Bund ausgebildet sein, wie Figur 5 erkennen lässt. An den Halteabschnitt 55 schließen sich beidseitig Nuten 56 an.

Die Halter 50 können bei geöffneter Schelle mit ihrem Halteabschnitt 55 in das Unterteil 41 eingelegt werden. Anschließend lässt sich das Oberteil 42 gegenüber dem Unterteil 41 verstellen, sodass der Halteabschnitt 55 in einer zwischen dem Unterteil 41 und dem Oberteil 42 der Schelle 40 gebildeten Aufnahme 45 eingeschlossen ist. Da der Halteabschnitt 55 gegenüber den anschließenden Konturen des Halters 50 in radialer Richtung zurückversetzt angeordnet ist, ergibt sich bei geschlossener Schelle 40 eine axial unverlierbare Sicherung des Halters 50 an der Schelle 40.

Die Schelle 40 kann mit einer Verriegelung 43 ausgestattet sein. Mittels dieser Verriegelung 43 lässt sich das Oberteil 42 mit dem Unterteil 41 verbinden, sodass der Halter 50 unverlierbar gehalten ist. Die Verriegelung 43 kann beispielsweise eine Rastverbindung sein oder von einer Schraubverbindung gebildet sein.

Wie Figur 3 zeigt, umfasst das Rückzugssystem 20 auch einen Hohlprofilabschnitt 60. Im vorliegenden Ausführungsbeispiel ist der Hohlprofilabschnitt 60 als ein zylindrisches Rohr ausgebildet. Der Hohlprofilabschnitt 60 kann jedoch auch eine beliebige andere Geometrie einnehmen. Bevor die Halter 50 in der vorbeschriebenen Weise mit den Schellen 40 verbunden werden, werden die Halter 50 auf die Enden 61, 62 des Hohlprofilabschnitts 60 aufgesteckt hierzu werden die Enden 61, 62 in den von der Wand 51 der Halter 50 umschlossenen Bereich eingesetzt. Die Wände 51 halten dann den Hohlprofilabschnitt 60 in radialer Richtung. Die Enden 61, 62 liegen an den Stützabschnitten 52 an oder stehen diesen im geringen Abstand gegenüber. Auf diese Weise ist der Hohlprofilabschnitt 60 auch in axialer Richtung gesichert. Mit den beiden aufgesteckten Haltern 50 kann der Hohlprofilabschnitt 60 mit den Schellen 40 in der oben beschriebenen Weise gekoppelt werden.

Figur 4 detailliert den Innenaufbau des Rückzugssystems 20 weiter, wobei in dieser Darstellung zur besseren Übersichtlichkeit der Hohlprofilabschnitt 60 nicht dargestellt wurde. Wie diese Darstellung erkennen lässt, ist der Zuführschlauch 14 durch die von den Haltern 50 gebildeten Durchführungen 53 hindurchgeführt. Zwischen den Haltern 50 ist eine Rückstellfeder 80 angeordnet. Diese Rückstellfeder 80 verläuft innerhalb des Hohlprofilabschnitts 60. Die Rückstellfeder 80 kann, wie dies Figur 4 zeigt, als Spiralfeder ausgebildet sein. Die Rückstellfeder 80 besitzt zwei Federenden 81, 82. Das 1. Federende 81 stützt sich gegenüber dem, in Figur 4 linken Halter 50 ab. Dieses Federende 81 liegt dabei auf dem Stützabschnitt 52 dieses Halters 50 auf. Das andere Federende 52 ist an einem Gegenlager 90 abgestützt.

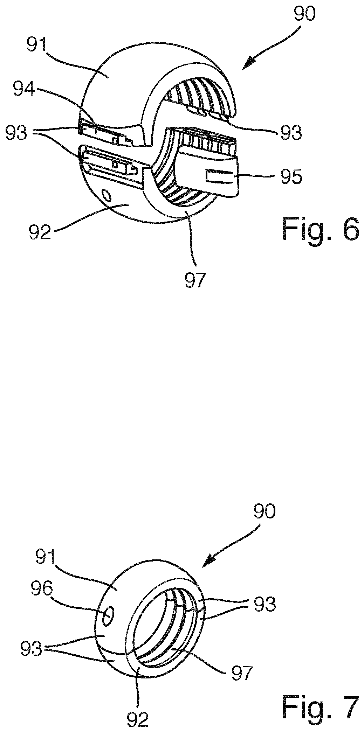

Die Figuren 6 und 7 lassen mögliche Ausgestaltungsvarianten eines solchen Gegenlagers 90 erkennen.

Wie Figur 6 zeigt, weist das Gegenlager 90 zwei Halbschalen 91, 92 auf. Die Halbschalen 91, 92 weisen Ansätze 93 auf, die gegeneinander gestellt werden können. Zur Verbindung der beiden Halbschalen 91, 92 sind Verbinder 95 verwendet.

Die Ansätze 93 können, wie Figur 6 zeigt, hinterschnittene Führungselemente aufweisen, auf die der Verbinder 95 mit entsprechend hinterschnittenen Gegenelementen aufgeschoben werden kann.

Denkbar ist es auch, wie dies Figur 7 zeigt, dass als Verbinder 95 Befestigungsschrauben verwendet sind, wobei diese Befestigungsschrauben durch Schraubaufnahmen 96 einer der Halbschalen 91, 92 hindurchgesteckt und in eine Schraubaufnahme der zweiten Halbschale 91, 92 eingeschraubt sind.

Wie die Figuren 6 und 7 zeigen, besitzen die Gegenlager 90 Formschlusselemente 97. Die Formschlusselemente 97 sind dazu ausgebildet mit Gegen-Formschlusselement des Zuführungsschlauchs 14 zusammenzuarbeiten.

Zurückkommend auf Figur 4 wird deutlich, dass sich die Rückstellfeder 80 mit ihrem Federende 82 auf der zugekehrten Seite des Gegenlagers 90 abstützt. Die Rückstellfeder 80 ist dementsprechend zwischen dem Gegenlager 90 und dem in Figur 4 linken Halter 50 federvorgespannt gehalten.

Zur Montage des Gegenhalters 90 auf dem Zuführschlauch 14 werden die beiden Halbschalen 91, 92 des Gegenlagers 90 über den Zuführschlauch 14 gesetzt. Wie Figur 4 erkennen lässt, ist der Zuführschlauch 14 als Wellschlauch ausgebildet. Er weist dementsprechend eine spiralförmige, ähnlich einem Gewinde ausgebildete Profilierung auf, die radial nach außen vorsteht. Denkbar ist es auch, dass der Zuführschlauch umlaufende Rippen aufweist, die zueinander beabstandet auf dem Zuführschlauch 14 angeordnet sind und von diesem vorstehen. Das Gegenlager 90 weist an zumindest einer der Halbschalen 91, 92 eine entsprechend ausgebildete Gegen-Profilierung auf, die das Formschlusselement 97 bildet, wie dies die Figuren 6 und 7 erkennen lassen.

Mit dem Formschlusselement 97 greifen die Halbschalen 91, 92 in die Profilierung des Zuführschlauchs 14 ein. Anschließend können die beiden Halbschalen 91, 92 miteinander, in der vorgeschriebenen Weise verbunden werden. Auf diese Weise ist das Gegenlager 90 in Längsrichtung des Zuführschlauchs 14 unverschiebbar an diesem gehalten.

Wird nun, bedingt durch die Bewegung des Industrieroboters 10, in der in Figur 4 gezeigten Ausgangsstellung der Zuführschlauch 14 nach links gezogen, so wird auch das mit dem Zuführschlauch 14 verbundene Gegenlager 90 nach links verschoben. Dabei wird die Rückstellfeder 80 weiter gespannt. Das Gegenlager 90 bewegt sich auf den, in Figur 4 links gezeigten Halter 50 zu. Infolge dieser Bewegung verkleinert sich der Bogen 14.1 des Zuführschlauchs 14. Führt der Industrieroboter nun eine Gegenbewegung aus, so wird das Gegenlager 90 wird von der Rückstellfeder 80 zurückgedrückt. Der Bogen 14.1 vergrößert sich dann wieder.

Wie Figur 4 erkennen lässt, ist die die Rückstellfeder 80 über den Zuführschlauch geschoben, sodass dieser sich zentrisch in der Rückstellfeder 80 bewegen kann. Der Zuführschlauch 14 ist auch durch die Durchführungen 53 des Halters 50 geführt. Mit den Einführerweiterungen 54 der Halter 50 wird sichergestellt, dass der Zuführschlauch 14 auch dann, wenn er im Anschluss an die Rückzugvorrichtung 20 winkelig angestellt ist, stets zuverlässig in die Rückzugvorrichtung 20 einfahren kann.

Abhängig von dem vorgegebenen Bewegungsablauf und dem damit einhergehenden Bewegungsverhalten des Zuführschlauchs 14 lässt sich das Gegenlager 90 an einer geeigneten Position zwischen den beiden Haltern 50 mit dem Zuführschlauch 14 verbinden.

Wird nun aufgrund eines geänderten Bewegungsablaufs des Industrieroboters 10 ein größerer oder kleinerer Rückstellweg gewünscht, so lässt sich die erfindungsgemäße Rückzugvorrichtung einfach anpassen. Zu diesem Zweck wird ein längerer oder kürzerer Hohlprofilabschnitt 60 verwendet, der gegen den vorhandenen Hohlprofilabschnitt 60 ausgetauscht wird. Auf diese Weise lassen sich die Halter 50 in einem größeren oder kleineren Abstand zueinander positionieren. Weiterhin wird dann auch eine längere oder kürzere Rückstellfeder 80 eingesetzt, um eine Anpassung auf den gewünschten Bewegungsablauf durchführen zu können.

Die in Figur 2 gezeigte Rückzugvorrichtung 20 lässt sich zusammen mit dem Zuführschlauch 14 (siehe Figur 4) zu einer Baueinheit vormontieren. Anschließend lässt sich diese Baueinheit mit dem Industrieroboter 10 verbinden. Hierzu werden die Schraubaufnahmen 33 im Adapter 30 verwendet.

## Patentansprüche

1. Rückzugsystem (20) für einen Industrieroboter (10), zur Straffung zumindest einer entlang eines Roboterarms (12) geführten Zuführungsanordnung, mit einem Zuführungsschlauchs (14), zum Längenausgleich in Folge einer Bewegung des Roboterarms (12),
wobei das Rückzugsystem (20) wenigstens eine Rückstellfeder (80) aufweist, die über ein Gegenlager (90) mit dem Zuführungsschlauch (14) koppelbar ist, wobei das Rückzugsystem (20) zwei Halter (50) aufweist, die zueinander beabstandet angeordnet sind und die jeweils einen Stützabschnitt (52) aufweisen,
wobei ein Hohlprofilabschnitt (60) mit seinen längsseitigen Enden (61, 62) an den Stützabschnitten (52) mittelbar oder unmittelbar anliegt,
wobei der von dem Hohlprofilabschnitt (60) umgebene Hohlraum mit Durchführungen (53) der Halter (50) zur Durchleitung der Zuführanordnung in räumlicher Verbindung steht, und wobei
ein Adapter (30) mit zwei Koppelstücken (31) vorgesehen ist, an denen die Halter (50) angekoppelt sind, dass die beiden Koppelstücke (31) über ein Verbindungsstück (34) des Adapters (30) miteinander verbunden sind, **dadurch gekennzeichnet,**
**dass** der Adapter (30) wenigstens eine Reihe von Befestigungsaufnahmen (32) aufweist, die vorzugsweise in gleicher Teilung zueinander beabstandet angeordnet sind, wobei die Reihe von Befestigungsaufnahmen (32) in Richtung der Längserstreckung des Hohlprofilabschnitts (60) verläuft, und dass der oder die Halter (50) an den Befestigungsaufnahmen (32) in verschiedenen, in Richtung der Längserstreckung des Hohlprofilabschnitts versetzt angeordneten, Befestigungspositionen an den Adapter (30) ankoppelbar ist/sind,
und/oder dass der Adapter (30) wenigstens eine als Langloch ausgebildete Befestigungsaufnahme (32) aufweist, welche sich in Richtung der Längserstreckung des Hohlprofilabschnitts (60) erstreckt, und dass der Halter (50) an dieser Befestigungsaufnahme (32) in verschiedenen, in Richtung der Längserstreckung des Hohlprofilabschnitts (60) versetzt angeordneten, Befestigungspositionen an den Adapter (30) ankoppelbar ist.

2. Rückzugsystem nach Anspruch 1, **dadurch gekennzeichnet, dass** die beiden Koppelstücke (31) über das Verbindungsstück (34) des Adapters (30) einteilig miteinander verbunden sind.

3. Rückzugssystem nach Anspruch 1 oder 2, **dadurch gekennzeichnet, dass** der Adapter (30) von einem plattenförmigen Zuschnitt gebildet ist, besonders bevorzugt als Stanz-Biegeteil aus einem Blechmaterial besteht.

4. Rückzugssystem nach einem der Ansprüche 1 bis 3, **dadurch gekennzeichnet, dass** zumindest einer der Halter (50) eine Wand (51) aufweist, die an der Außenwandung oder der Innenwandung des Hohlprofilabschnitts (60) im Bereich des zugewandten Endes (61, 62) des Hohlprofilabschnitts (60) quer zur Längserstreckung des Hohlprofilabschnitts (60) formschlüssig anliegt.

5. Rückzugssystem nach einem der Ansprüche 1 bis 4, **dadurch gekennzeichnet, dass** zumindest einer der der Halter (50) eine zumindest bereichsweise umlaufende ebene Fläche aufweist, die den Stützabschnitt (52) bildet, und dass der Hohlprofilabschnitt (60) im Bereich seines dem Halter (50) zugewandten Endes (61, 62) mit seiner längsseitigen Stirnfläche anliegt.

6. Rückzugssystem nach einem der Ansprüche 1 bis 5, **dadurch gekennzeichnet, dass** wenigstens einer der Halter (50) eine, vorzugsweise allseitig geschlossene Durchführung (53) aufweist, die in einer Einführerweiterung (54) ausläuft, wobei die Einführerweiterung (54) auf der dem Hohlprofilabschnitt (60) abgewandten Seite des Halters (50) angeordnet ist.

7. Rückzugssystem nach einem der Ansprüche 1 bis 6, **dadurch gekennzeichnet, dass** wenigstens einer der Halter (50) einen Halteabschnitt (55) aufweist, an dem eine Schelle (40) befestigt ist, und dass die Schelle (40) an dem Adapter (30) befestigt ist.

8. Rückzugssystem nach einem der Ansprüche 1 bis 7, **dadurch gekennzeichnet, dass** zwei baugleiche Halter (50) verwendet sind.

9. Rückzugssystem nach einem der Ansprüche 7 oder 8, **dadurch gekennzeichnet, dass** zwei baugleiche Schellen (40) verwendet sind.

10. Rückzugssystem nach einem der Ansprüche 7 bis 9, **dadurch gekennzeichnet, dass** die Schellen (40) aus einem Unterteil (41) und einem Oberteil (42) zusammengesetzt sind, wobei das Unterteil (41) mit dem Oberteil (42) unter Vermittlung eines Filmscharniers (44) einteilig verbunden ist.

11. Rückzugssystem (20) nach einem der Ansprüche 1 bis 10, **dadurch gekennzeichnet, dass** der Hohlprofilabschnitt (60) als zylindrisches Rohr ausgebildet ist.

12. Rückzugssystem nach einem der Ansprüche 1 bis 11, **dadurch gekennzeichnet, dass** die Rückstellfeder (80) innerhalb des Hohlprofilabschnitts (60) angeordnet ist.

13. Rückzugssystem nach einem der Ansprüche 1 bis 12, **dadurch gekennzeichnet, dass** die Rückstellfeder (80) unter Vermittlung des Gegenlagers (90) mit dem Zuführungsschlauch (14) verbunden ist.

14. Rückzugssystem nach einem der Ansprüche 1 bis 13, **dadurch gekennzeichnet, dass** das Gegenlager (90) in seinem, dem Zuführungsschlauch (14) zugewandten Bereich wenigstens ein Formschlusselement (97) aufweist, zur Bildung einer Formschlussverbindung mit einem Formschluss-Gegenelement auf der Außenseite des Zuführschlauchs.

15. Rückzugssystem nach Anspruch 14, **dadurch gekennzeichnet, dass** der Zuführungsschlauch (14) auf seiner Außenseite eine Profilierung aufweist, welche die Formschluss-Gegenelemente bildet und die vorzugsweise von umlaufenden Rippen gebildet ist.

16. Rückzugssystemen nach einem der Ansprüche 1 bis 15, **dadurch gekennzeichnet, dass** das Gegenlager (90) zwei Hüllteile (91, 92) aufweist, die im Bereich eines Trennbereichs derart miteinander verbindbar sind, dass die beiden Hüllteile (91, 92) eine Aufnahme für den Zuführungsschlauch (14) umschließen.

17. Rückzugssystem (20) nach einem der Ansprüche 1 bis 16, **dadurch gekennzeichnet, dass** die Rückstellfeder (80) als Spiralfeder, vorzugsweise als Druckfeder ausgebildet ist und den Zuführungsschlauch (14) umgibt, dass sich die Rückstellfeder (80) im Bereich ihres einen Federendes (81) an einem der Halter (50) abstützt, und dass das andere Federende (82) der Rückstellfeder (80) an das Gegenlager (90) angekoppelt ist.

## Claims

1. A retraction system (20) for an industrial robot (10), for tightening at least one feed arrangement guided along a robot arm (12), with a feed tube (14), for length compensation as a result of a movement of the robot arm (12), wherein the retraction system (20) has at least one return spring (80) which can be coupled to the feed tube (14) via an abutment (90), wherein the retraction system (20) has two holders (50) which are arranged at a distance from one another and which each have a support section (52), a hollow profile section (60) bearing indirectly or directly with its longitudinal ends (61, 62) against the support sections (52), wherein the cavity surrounded by the hollow profile section (60) is in spatial communication with passages (53) of the holders (50) for the feed arrangement to pass through, and wherein an adapter (30) is provided with two coupling pieces (31) to which the holders (50) are coupled, wherein the two coupling pieces (31) are connected to one another via a connecting piece (34) of the adapter (30),
**characterized in that** the adapter (30) has at least one row of fastening receptacles (32) which are preferably arranged at equal intervals from one another, the row of fastening receptacles (32) running in the direction of the longitudinal extent of the hollow profile section (60), and **in that** the holder or holders (50) can be coupled to the adapter (30) at the fastening receptacles (32) in various fastening positions which are offset in the direction of the longitudinal extent of the hollow profile section, and/or **in that** the adapter (30) has at least one fastening receptacle (32) which is in the form of an elongated hole which extends in the direction of the longitudinal extent of the hollow profile section (60), and **in that** the holder (50) can be coupled to the adapter (30) at this fastening receptacle (32) in various fastening positions which are offset in the direction of the longitudinal extent of the hollow profile section (60).

2. Retraction system according to claim 1, **characterized in that** the two coupling pieces (31) are connected to each other integrally via the connecting piece (34) of the adapter (30).

3. Retraction system according to claim 1 or 2, **characterized in that** the adapter (30) is formed by a plate-shaped blank, particularly preferably as a stamped-bent part consisting of a sheet metal material.

4. Retraction system according to one of claims 1 to 3, **characterized in that** at least one of the holders (50) has a wall (51) which bears positively against the outer wall or the inner wall of the hollow profile section (60) in the region of the adjacent end (61, 62) of the hollow profile section (60) transversely to the longitudinal extent of the hollow profile section (60).

5. Retraction system according to one of claims 1 to 4, **characterized in that** at least one of the holders (50) has an at least regionally circumferential flat surface which forms the support section (52), and **in that** the hollow profile section (60) bears with its longitudinal end face in the region of its end (61, 62) facing the holder (50).

6. Retraction system according to one of claims 1 to 5, **characterized in that** at least one of the holders (50) has a passage (53) which is preferably closed on all sides and ends in an insertion extension (54), the insertion extension (54) being arranged on the side of the holder (50) facing away from the hollow profile section (60).

7. Retraction system according to any one of claims 1 to 6, **characterized in that** at least one of the holders (50) has a retaining section (55) to which a clamp (40) is attached, and **in that** the clamp (40) is attached to the adapter (30).

8. Retraction system according to any one of claims 1 to 7, **characterized in that** two holders (50) of identical construction are used.

9. Retraction system according to one of claims 7 or 8, **characterized in that** two clamps (40) of identical design are used.

10. Retraction system according to one of claims 7 to 9, **characterized in that** the clamps (40) are composed of a lower part (41) and an upper part (42), the lower part (41) being integrally hinged to the upper part (42) by means of an integral hinge (44).

11. Retraction system (20) according to any one of claims 1 to 10, **characterized in that** the hollow profile section (60) is formed as a cylindrical tube.

12. Retraction system according to any one of claims 1 to 11, **characterized in that** the return spring (80) is arranged within the hollow profile section (60).

13. Retraction system according to one of claims 1 to 12, **characterized in that** the return spring (80) is connected to the feed tube (14) with mediation of the abutment (90).

14. Retraction system according to any one of claims 1 to 13, **characterized in that** the abutment (90) has, in its region facing the feed tube (14), at least one positive-locking element (97) for forming a positive-locking connection with a positive-locking counter-element on the outside of the feed tube.

15. Retraction system according to claim 14, **characterized in that** the feed tube (14) has on its outer side a profiling which forms the positive-locking counter-element and which is preferably formed by circumferential fins.

16. Retraction system according to one of claims 1 to 15, **characterized in that** the abutment (90) has two shell parts (91, 92) which can be connected to one another in the region of a separation area in such a way that the two shell parts (91, 92) enclose a receptacle for the feed tube (14).

17. Retraction system (20) according to one of claims 1 to 16, **characterized in that** the return spring (80) is designed as a spiral spring, preferably as a compression spring, and surrounds the feed tube (14), **in that** the return spring (80) is supported in the region of its one spring end (81) on one of the holders (50), and **in that** the other spring end (82) of the return spring (80) is coupled to the abutment (90).

## Revendications

1. Système de rétraction (20) pour un robot industriel (10), pour tendre au moins un dispositif d'alimentation guidé le long d'un bras de robot (12), avec un tuyau d'alimentation (14), pour compenser la longueur suite à un mouvement du bras de robot (12), le système de rétraction (20) présentant au moins un ressort de rappel (80) qui peut être couplé au tuyau d'alimentation (14) par l'intermédiaire d'une butée (90), le système de rétraction (20) présentant deux supports (50), qui sont disposés à distance l'un de l'autre et qui présentent chacun une section d'appui (52), une section de profilé creux (60) s'appliquant directement ou indirectement par ses extrémités longitudinales (61, 62) contre les sections d'appui (52), en ce que l'espace creux entouré par la section de profilé creux (60) est en liaison spatiale avec des traversées (53) des supports (50) pour le passage du système d'alimentation, et un adaptateur (30) étant prévu avec deux pièces de couplage (31) auxquelles les supports (50) sont couplés, en ce que les deux pièces de couplage (31) sont reliées l'une à l'autre par l'intermédiaire d'une pièce de liaison (34) de l'adaptateur (30), **caractérisé en ce que** l'adaptateur (30) présente au moins une série de logements de fixation (32) qui sont disposés à distance les uns des autres, de préférence avec le même pas, la série de logements de fixation (32) s'étendant dans la direction de l'extension longitudinale de la section de profilé creux (60), et **en ce que** le ou les supports (50) peuvent être couplés à l'adaptateur (30) au niveau des logements de fixation (32) dans différentes positions de fixation décalées dans le sens de l'extension longitudinale de la section de profilé creux, et/ou **en ce que** l'adaptateur (30) présente au moins un logement de fixation (32) conçu comme un trou oblong, qui s'étend dans la direction de l'extension longitudinale de la section de profilé creux (60), et **en ce que** le support (50) peut être couplé à l'adaptateur (30) sur ce logement de fixation (32) dans différentes positions de fixation décalées dans la direction de l'extension longitudinale de la section de profilé creux (60).

2. Système de rétraction selon la revendication 1, **caractérisé en ce que** les deux pièces de couplage (31) sont reliées entre elles d'un seul tenant par la pièce de liaison (34) de l'adaptateur (30).

3. Système de rétraction selon la revendication 1 ou 2, **caractérisé en ce que** l'adaptateur (30) est formé par une pièce découpée en forme de plaque, de préférence en tant que pièce découpée et pliée dans un matériau en tôle.

4. Système de rétraction selon l'une des revendications 1 à 3, **caractérisé en ce qu'**au moins l'un des supports (50) présente une paroi (51) qui s'applique par complémentarité de forme contre la paroi extérieure ou la paroi intérieure de la section de profilé creux (60) dans la zone de l'extrémité (61, 62) de la section de profilé creux (60) qui lui fait face, transversalement à l'extension longitudinale de la section de profilé creux (60).

5. Système de rétraction selon l'une des revendications 1 à 4, **caractérisé en ce qu'**au moins l'un des supports (50) présente une surface plane périphérique au moins par zones, qui forme la section d'appui (52), et **en ce que** la section de profilé creux (60) est en appui par sa surface frontale longitudinale dans la zone de son extrémité (61, 62) tournée vers le support (50).

6. Système de rétraction selon l'une des revendications 1 à 5, **caractérisé en ce qu'**au moins l'un des supports (50) présente un passage (53), de préférence fermé de tous côtés, qui se termine par un élargissement d'introduction (54), l'élargissement d'introduction (54) étant disposé sur le côté du support (50) opposé à la section de profilé creux (60).

7. Système de rétraction selon l'une des revendications 1 à 6, **caractérisé en ce qu'**au moins l'un des supports (50) comporte une section de retenue (55) sur laquelle est fixé un collier (40), et **en ce que** le collier (40) est fixé sur l'adaptateur (30).

8. Système de rétraction selon l'une quelconque des revendications 1 à 7, **caractérisé en ce que** deux supports (50) de construction identique sont utilisés.

9. Système de rétraction selon l'une des revendications 7 ou 8, **caractérisé en ce que** deux colliers (40) de construction identique sont utilisés.

10. Système de rétraction selon l'une des revendications 7 à 9, **caractérisé en ce que** les colliers (40) sont composés d'une partie inférieure (41) et d'une partie supérieure (42), la partie inférieure (41) étant reliée d'un seul tenant à la partie supérieure (42) par l'intermédiaire d'une charnière à film (44).

11. Système de rétraction (20) selon l'une des revendications 1 à 10, **caractérisé en ce que** la section de profilé creux (60) est réalisée sous la forme d'un tube cylindrique.

12. Système de rétraction selon l'une des revendications 1 à 11, **caractérisé en ce que** le ressort de rappel (80) est disposé à l'intérieur de la section de profilé creux (60).

13. Système de rétraction selon l'une des revendications 1 à 12, **caractérisé en ce que** le ressort de rappel (80) est relié au tuyau d'alimentation (14) par l'intermédiaire de la butée (90).

14. Système de rétraction selon l'une des revendications 1 à 13, **caractérisé en ce que** la butée (90) comporte, dans sa zone tournée vers le tuyau d'alimentation (14), au moins un élément à engagement positif (97), pour former une liaison par engagement positif avec un contre-élément à engagement positif situé à l'extérieur du tuyau d'alimentation.

15. Système de rétraction selon la revendication 14, **caractérisé en ce que** le tuyau d'alimentation (14) présente sur son côté extérieur un profilage qui forme les contre-éléments à engagement positif et qui est de préférence formé par des nervures périphériques.

16. Systèmes de retrait selon l'une des revendications 1 à 15, **caractérisés en ce que** la butée (90) comporte deux parties enveloppantes (91, 92) qui peuvent être reliées entre elles au niveau d'une zone de séparation de telle sorte que les deux parties enveloppantes (91, 92) entourent un logement pour le tuyau d'alimentation (14).

17. Système de rétraction (20) selon l'une des revendications 1 à 16, **caractérisé en ce que** le ressort de rappel (80) est réalisé sous la forme d'un ressort spiral, de préférence d'un ressort de compression, et entoure le tuyau d'alimentation (14), **en ce que** le ressort de rappel (80) s'appuie dans la zone de l'une de ses extrémités (81) sur l'un des supports (50), et **en ce que** l'autre extrémité (82) du ressort de rappel (80) est couplée à la butée (90).
